(19) Europäisches Patentamt
European Patent Office
Office européen des brevets

(11) EP 2 944 665 A1

(12) **EUROPEAN PATENT APPLICATION**
published in accordance with Art. 153(4) EPC

(43) Date of publication:
**18.11.2015 Bulletin 2015/47**

(21) Application number: **14738201.4**

(22) Date of filing: **10.01.2014**

(51) Int Cl.:
***C08G 69/36*** *(2006.01)* ***C08L 77/00*** *(2006.01)*

(86) International application number:
**PCT/CN2014/070447**

(87) International publication number:
**WO 2014/108091 (17.07.2014 Gazette 2014/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.01.2013 CN 201310013794**

(71) Applicants:
- **Kingfa Sci&Tech Co. Ltd.**
  **Guangzhou, Guangdong 510520 (CN)**
- **Zhuhai Wango Chemical Co. Ltd.**
  **Guangdong 519050 (CN)**

(72) Inventors:
- **ZHANG, Chuanhui**
  **Guangzhou**
  **Guangdong 510520 (CN)**
- **CAI, Tongmin**
  **Guangzhou**
  **Guangdong 510520 (CN)**
- **ZENG, Xiangbin**
  **Guangzhou**
  **Guangdong 510520 (CN)**
- **CAO, Min**
  **Guangzhou**
  **Guangdong 510520 (CN)**
- **XIA, Shiyong**
  **Guangzhou**
  **Guangdong 510520 (CN)**
- **YE, Nanbiao**
  **Guangzhou**
  **Guangdong 510520 (CN)**
- **CHEN, Dahua**
  **Guangzhou**
  **Guangdong 510520 (CN)**
- **YUAN, Shaoyan**
  **Guangzhou**
  **Guangdong 510520 (CN)**

(74) Representative: **Von Kreisler Selting Werner - Partnerschaft**
**von Patentanwälten und Rechtsanwälten mbB**
**Deichmannhaus am Dom**
**Bahnhofsvorplatz 1**
**50667 Köln (DE)**

# (54) POLYAMIDE RESIN AND USE THEREOF AND POLYAMIDE COMPOSITION CONSISTING OF SAME

(57) The present invention discloses a polyamide resin and its application and polyamide composition thereof. The repeating units of the described polyamide resin comprises the following components: dicarboxylic acid units composed 80-100mol% of polyamide resin; aliphatic diamines units having 2-14 carbon atoms composed 80-100mol% of polyamide resin; lactam or amino acid units having 6-14 carbon atoms composed 0-20mol% of polyamide resin; in the described polyamide resin, the bio-based carbon concentration is more than 45%; the described bio-based carbon mole concentration is calculated according to the formula below: bio-based carbon concentration=(bio-based carbon mole content/total organic carbon mole content)*100%. The described polyamide resin in the present invention has low gas volatile, hence the polyamide composition produced thereof has low gas volatile too, and can be applied to food-contact field. In addition, the surface condition after reflow soldering of the polyamide composition produced is good.

EP 2 944 665 A1

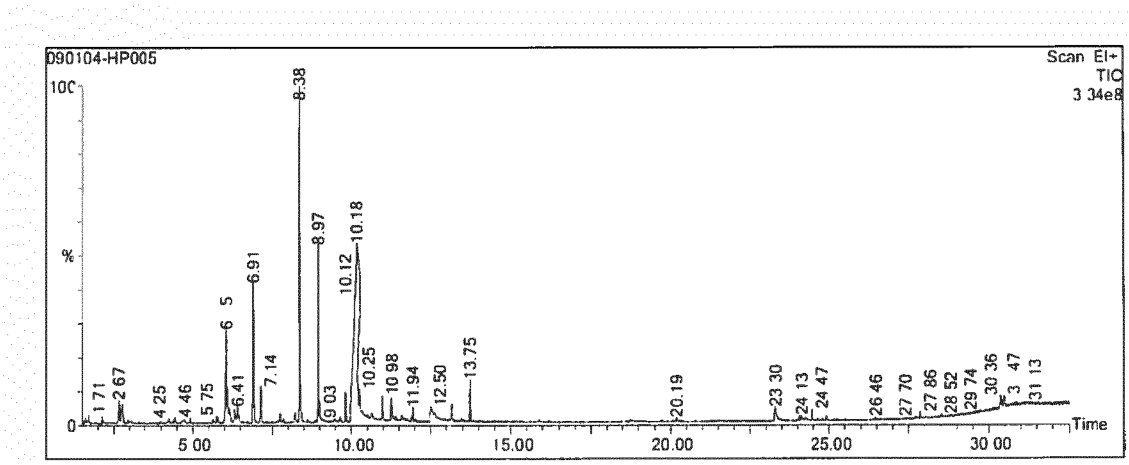
090104-HP005
Scan EI+
TIC
3 34e8
100
%
0
Time
5 00
10.00
15.00
20.00
25.00
30 00
8.38
8.97
10.18
10.12
6.91
6 5
10.25
13.75
7.14
12.50
10 98
11.94
6.41
2 67
1 71
4 25
4 46
5 75
9 03
20.19
23 30
24 13
24 47
26 46
27 70
27 86
28 52
29 74
30 36
3 47
31 13

Figure 1

## Description

### Field of the Present Invention

The present invention relates to macromolecular material field, and in particular, to a polyamide resin and its application and polyamide composition thereof.

### Prior Art

Because polyamide possesses excellent overall performances, including mechanical properties, heat-resistant property, wear resistance, chemical resistance, self-lubrication, low frication coefficient, certain fire resistance and easy processibility etc., it was widely used to filler reinforced modification by glass fiber and other fillers to enhance performances and enlarge application range. In recent years, semi-aromatic polyamide has developed critically due to its more excellent heat-resistance and mechanical property.

But the existing polyamide resin mainly uses raw materials from mineral oil cracking products during synthesis process. Mineral oil is non-renewable, and the refining of these raw materials needs to undergo complicate chemical processes and consume large amount of energy and produce many by-products causing environment contamination. This polyamide contains some gas volatile, which emits gradually in the process of using ,and affects users' health. For example, when polyamide is used in food-contact filed, the content of gas volatile in the polyamide composition even more needs to be controlled reasonably. In addition, the reduction of gas volatile means that the surface of polyamide article does not blister easily in the condition of high temperature handling (for example, reflow soldering process), which is of great significance to the main application of high temperature nylon at present-the field in need of high temperature processing, viz., LED support, etc..

### Summary of the Present Invention

The objective of the present invention is to overcome the deficiency of the prior art and to provide a polyamide resin with low gas volatile content.

Another objective of the present invention is to provide a polyamide composition composed of the described polyamide resin with low gas volatile content.

A polyamide resin, the repeating units of which consist of the following components:,

Component A:40-50mol% of dicarboxylic acid units, based on the total repeating units of the polyamide resin;

Component B: 40-50mol% of aliphatic diamine units having 2-14 carbon atoms, based on the total repeating units of the polyamide resin;

Component C: 0-10mol% of lactam or amino acid units having 6-14 carbon atoms, based on the total repeating units of the polyamide resin;

wherein, the described component A is composed of 70-100mol% of benzenedicarboxylic acidunit A1 and 0-30mol% of aliphatic dicarboxylic acid unit A2, based on the total mole content of component A;
wherein, the described component B is composed of 70-100mol% of 1,10-decanediamine unit B1, 0-30mol% of aliphatic diamine unit B2 having 2-9 carbon atoms, and 0-10mol% of aliphatic diamine unit B3 having 11-14 carbon atoms, based on the total mole content of component B;
and satisfy that at least an arbitrary component of component A or B, comprises more than two different units;
In the described polyamide resin, the bio-based carbon concentration is more than 45%; the described bio-based carbon concentration is calculated according to the formula below:

bio-based carbon concentration=(bio-based carbon mole content/total organic carbon mole content)*100%;

here the described *satisfy that at least an arbitrary component of component A or B, comprises more than two different units* includes three conditions below:

component A comprises only one dicarboxylic acid unit, and component B comprisemore than two different aliphatic diamine units;

component B comprises only one diamine unit, and component A comprise more than two different dicarboxylic

acid units;

and component A comprise more than two different dicarboxylic acid units and component B comprise more than two different aliphatic diamine units.

Wherein, the described component A comprises 45-50mol% of the polyamide resin.
Wherein, the described component A is composed of 80-95mol% of benzenedicarboxylic acid unit A1 and 5-20mol% of aliphatic dicarboxylic acid unit A2, based on the total mole content of component A.
Wherein, in the described polyamide resin, the bio-based carbon concentration is more than 50%.
Wherein, in the described polyamide resin, the bio-based carbon concentration is more than 55.6%.
Wherein, the described benzenedicarboxylic acid unit A1 is composed of 80-100mol% of terephthalic acid unit, 0-20mol% of isophthalic acid unit and 0-10mol% of phthalic acid unit; and wherein, the described aliphatic acid unit is aliphatic acid unit having 2-14 carbon atoms.
Wherein, the described benzenedicarboxylic acid unit A1 is composed of 85-100mol% of terephthalic acid unit, 0-15mol% of isophthalic acid unit and 0-5mol% of phthalic acid unit.
Wherein, aliphatic acid is selected from at least one of oxalic acid, malonic acid, succinic acid, glutaric acid, adipic acid, pimelic acid, suberic acid, 2-methyl suberic acid,azelaic acid, sebacic acid, undecanedioic acid, dodecanedioic acid, brassylic acid or tetradecanedioic acid.
Wherein, the described aliphatic acid unit A2 is composed of 80-100mol% of adipic acid unit and 0-20mol% of aliphatic dicarboxylic acid unit having 7-14 carbon atoms.
Wherein, the described aliphatic acid unit A2 is composed of 90-100mol% of adipic acid unit and 0-10mol% of aliphatic dicarboxylic acid unit having 7-14 carbon atoms.
Wherein, the described component B comprises 45-50mol% of the polyamide resin.
Wherein, the described component B is composed of 80-100mol% of 1,10-decanediamine unit, 0-20mol% of aliphatic diamine unit having 2-9 carbon atoms, and 0-5mol% of aliphatic diamine unit having 11-14 carbon atoms, based on the total mole content of component B.
Wherein, the described aliphatic diamine having 2-9 carbons is selected from arbitrary one or several of ethylenediamine, propane diamine, putrescine, cadaverine, 2-methyl-pentanediamine, hexanediamine, heptanediamine, octanediamine, 2-methyl-octanediamine, 2,2,4-trimethylhexamethylenediamine, 2,4,4-trimethylhexamethylenediamine, 5-methylene-nonanediamine ornonanediamine.
Wherein, the described aliphatic diamine having 11-14 carbon atoms is selected from arbitrary one or several of undecanediamine, dodecanediamine, tridecanediamine or tetradecanediamine.
Wherein, the described lactam or amino acid having 6-14 carbon atoms is selected from arbitrary one or several of 6-amino adipic acid, caprolactam, 10-amino decanoic acid, 11-amino undecanoic acid, azacyclododecan-2-one, 12-amino dodecanoic acid orlaurolactam.
In the present invention, the bio-based dicarboxylic acid can be selected from oxalic acid, adipic acid, suberic acid, azelaic acid, sebacic acid; the bio-based diamine can be selected from putrescine, cadaverine, octanediamine, nonanediamine, decanediamine; other bio-based monomers can also be included, for example 11-amino undecanoic acid, etc..
The application of the described polyamide resin for the production of the polyamide composition.
A polyamide composition, which comprises the following components in percentage by weight:

30 to 99.7% of the polyamide resin according to any of claims 1 to 8,
0 to 60% of reinforced filler,
0 to 50% of flame retardant,
0 to 10% of other addition agent.

The described flame retardant can be flame retardant or composition of flame retardant and synergistic flame retardant; and at least one of reinforced filler, flame retardant and other addition agent is not equal to 0.
Wherein, in the described polyamide composition, the melting point of the polyamide resin is higher than 270 °C.
Wherein, in the described polyamide composition, the melting point of the polyamide resin is higher than 280 °C.
In the described polyamide composition, the content of the described reinforced filler is 10-50wt%.
The described reinforced filler can be inorganic reinforced filler or organic reinforced filler.
The shape of the described reinforced filler includes but is not limited to fibrous, powder, granule, tabular, needle-shaped and textile.
Wherein, the shape of the described reinforced filler is preferred to choose fibrous.
Wherein, the fibrous inorganic reinforced filler includes but is not limited to glass fiber, potassium titanate fiber, metal-coated glass fiber, ceramic fiber, wollastonite fiber, metal carbide fiber, metal-solidified fiber, asbestos fiber, aluminium oxide fiber, silicon carbide fiber, gypsum fiber and boron fiber.

Wherein, the fibrous organic reinforced filler includes but is not limited to aromatic polyamide fiber and carbon fiber.

Wherein, the described fibrous reinforced filler is preferred to choose glass fiber. Using glass fiber can not only enhance the moulding properties of the polyamide composition, but also enhance mechanical properties such as tensile strength, flexural strength and flexural modulus, and improve heat resistance properties such as heat deflection temperature in the moulding process of thermoplastic resin composition.

Wherein, the mean length of the described fibrous reinforced filler is 0.01-20mm, preferably 0.1-6mm.

Wherein, the length-diameter ratio of the described fibrous reinforced filler is 5-2000, preferably 30-600.

When the content of fibrous reinforced filler is within the aforementioned scope, the polyamide composition can show a high heat deflection temperature and increasing high temperature rigidity. The aforementioned dimension can be gotten by a micrometer to measure fiber.

Wherein, the shape of the described reinforced filler is non-fiber, such as powder, granule, tabular, needle-shaped, textile orcarpet, it includes but is not limited to potassium titanate whisker, zinc oxide whisker, aluminium borate whisker, wollastonite, zeolite, sericite, kaolin, mica, talc, clay, pyrophyllite, bentonite, montmorillonoid, lithium montmorillonoid, synthetic mica, asbestos, aluminosilicate, aluminium oxide, monox, magnesium oxide, zirconium oxide, titanium oxide, irooxide, calcium carbonate, magnesium carbonate, dolomite, calcium sulphate, barium sulfate, magnesium hydroxide, calcium hydroxide, aluminium hydroxide, glass bead, ceramic bead, boron nitride, silicon carbide or silicon dioxide.These reinforced fillers can be hollow. In addition, for swellable layered silicates such as bentonite, montmorillonite, hectorite, and synthetic mica, organized layered silicates prepared by cation exchange of interlayer ions with organic ammonium may be used.

Wherein, the shape of the described reinforced filler is non-fibrous, the mean particle size of reinforced filler is 0.001-10 um, preferably 0.01-5 um. When the mean particle size of reinforced filler is less than 0.001 um, it leads to inferior melting processibility of the polyamide resin; and when the mean particle size of the reinforced filler is more than 10 um, it leads to undesirable injection moulding article surface appearance. The mean particle size of the aforementioned reinforced material is tested by adsorption method.

To achieve much more excellent mechanical properties of the polyamide moulding composition, it is preferable to use coupling agent such as isocyanate compound, organic silane compound, organic titanate compound, organic borane compound, and epoxy compound to functionalized process for the inorganic filler material. An organic silane compound is particularly preferable, which includes but is not limited to γ -glycidoxy propyl trimethoxysilane, γ-glycidoxy propyl triethoxysilane, and β-(3,4-epoxy cyclohexyl)ethyl trimethoxysilane; mercapto-containing alkoxysilane compounds such as γ-mercaptopropyltrimethoxysilane, and γ-mercaptopropyltriethoxysilane; ureido-containing alkoxysilane compounds such as γ-ureidopropyltriethoxysilane, γ-ureidopropyltrimethoxysilane, and γ-(2-ureidoethyl) aminopropyltrimethoxysilane; isocyanato-containing alkoxysilane compounds such as γ-isocyanatopropyltriethoxysilane, γ-isocyanatopropyltrimethoxysilane, γ-isocyanatopropyl methyl dimethoxysilane, γ-isocyanatopropyl methyl diethoxysilane, γ-isocyanatopropyl ethyl dimethoxysilane, γ-isocyanatopropyl ethyl diethoxysilane, and γ-isocyanatopropyltrichlorosilane; amino-containing alkoxysilane compounds such as γ-(2-aminoethyl) aminopropyl methyl dimethoxysilane, γ-(2-aminoethyl) aminopropyltrimethoxysilane, and γ-aminopropyltrimethoxysilane; hydroxyl-containing alkoxysilane compounds such as γ-hydroxypropyl-trimethoxysilane, and γ -hydroxypropyltriethoxysilane; alkoxysilane compounds containing a carbon-carbon unsaturated group such as γ-methacryloxy propyl trimethoxysilane, vinyl trimethoxysilane, and N-β-(N-vinyl benzyl aminoethyl)-γ-aminopropyltrimethoxysilane hydrochloride; and anhydride-group-containing alkoxysilane compounds 3-trimethoxy silyl propyl succinic anhydride. In particular, γ-methacryloxy propyl trimethoxysilane, γ-(2-aminoethyl) aminopropyl methyl dimethoxysilane, γ-(2-aminoethyl) aminopropyltrimethoxysilane, γ-aminopropyltrimethoxysilane, and 3-trimethoxy silyl propyl succinic anhydride.

One can use the aforementioned organic silane compound to the surface treatment for the reinforced filler according to the general method, and then fuse mixing it with the polyamide resin to produce the described polyamide composition. One can also fuse mixing reinforced filler with polyamide resin, while add organic silane compound for in situ compounding.

Wherein, the content of the described coupling agent is 0.05-10% ,based on inorganic reinforced filler, preferably 0.1-5%. When the content of the coupling agent is less than 0.05%, the effect of obviously improved mechanical property cannot be achieved; and when the content of the coupling agent is more than 10%, inorganic filler is liable to agglomerate and risks undesirable dispersion in polyamide resin, finally leading to mechanical property deterioration.

Wherein, the described flame retardant or the combination of flame retardant and flame retardant synergist comprises 10-40% of polyamide composition weight. Wherein, the described flame retardant is halogen flame retardant or non-halogen flame retardant.

The described halogen flame retardant can be brominated polymer, includes but is not limited to brominated polystyrene, brominated polyphenyl ether, brominated bisphenol A epoxy resin, brominated polystyrene-maleic anhydride copolymer, brominated epoxy resin, brominated phenoxyl resin, decabromodiphenyl ether, decabromobiphenyl,

brominated polycarbonate, brominated pentadacane, brominated aromatic crosslinked polymer.

Wherein, the described halogen flame retardant is preferably brominated polystyrene.

The described non-halogen flame retardant includes but is not limited to nitrogen-containing flame retardant, phosphorus-containing flame retardant and/or nitrogen-and-phosphorus-containing flame retardant, preferable phosphorus-containing flame retardant. The described phosphorus-containing flame retardant includes but is not limited to single phosphoric acid aryl phosphate, bis-phosphoric acid aryl phosphate, alkyl dimethyl phosphate, triphenyl phosphate, tri(dimethylbenzene) phosphate, propyl benzene phosphate, butyl benzene phosphate, hypophosphite.

Wherein, the described non-halogen flame retardant is preferably hypophosphite. The described hypophosphite has the structure as shown in the formula below.

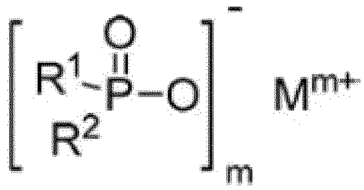

in the formula, $R^1$ and $R^2$ can be the same or not; $R^1$ and $R^2$ can be composed of linear or branched alkyl group having 1-6 carbon atoms and/or aryl or phenyl; M is chosen from one and/or more than one of calcium ion, magnesium ion, aluminium ion, zinc ion, bismuth ion, magnesium ion, sodium ion, potassium ion and protonizednitrogen-containing base; m is equal to 2 or 3.

Wherein, the described other addition agent includes but is not limited to plasticizer, thickener, antistatic agent, releasing agent, toner, colorant, nucleating agent.

Compared to the prior art, the present invention has beneficial effects below:

The described polyamide resin in the present invention has low gas volatile, hence the polyamide composition produced by it has low gas volatile too and can be used in food-contact field; meanwhile, because the described polyamide has low gas volatile, the surface condition after reflow soldering is good, and it can be applied to in the field of requiring high-temperature processing polyamide article.

**Attached figure illustration**

Figure 1 is dynamic headspace gas chromatography analysis curve of PA10T resin.

**Specific embodiments**

Further description on composition and production method of the polyamide resin in the present invention is done below in combination with some specific embodiments. Specific embodiments are to further describe the present invention in detail, not to limit the protection scope of the present invention.

The described bio-based carbon concentration is calculated according to the formula below:

Bio-based carbon concentration=(bio-based carbon mole content/total organic carbon mole content)*100%.

Relative viscosity of prepolymers and polyamides are tested respectively, test method of which refers to PRC National Standard GB12006.1-89: Viscosity number test method of polyamide.

The specific test method is to test relative viscosity $\eta_r$ of the polyamide with concentration of 0.25g/dl in 98% concentrated sulfuric acid at 25$\pm$0.01 °C.NCY-2 automatic viscometer produced by Shanghai Sierda scientific instrument limited company was used.

To test the melting point of the polyamide, the test method refers to ASTM D3418-2003, Standard Test Method for Transition Temperatures of Polymers By Differential Scanning Calorimetry.

The specific method is using Perkin Elmer Dimond DSC analysis meter to test melting point of samples. Nitrogen atmosphere with flow rate 40ml/min. During the test, the sample is heated to 340 °C at 10 °C/min, and is kept at 340 °C for 2min, and then is cooled to 50 °C at 10 °C/min, and is heated to 340 °C at 10 °C/min, and endothermic peak temperature at this time is setten as melting point Tm.

To test amino terminal group concentration of the polyamide, a Metrohm848Titrino plusautomatic potentiometric titrator is used to titrate amino terminal group concentration. Take 0.5 g polymer, and add 45 ml phenol and 3 ml anhydrous methanol. Heat and reflux. Observe the sample dissolves completely and cool to room temperature. Thenterminal aminoterminal group concentration is titrated by calibrated hydrochloric acid standard solution.

To test carboxyl terminalgroup concentration of the polyamide, a Metrohm848Titrino plusautomatic potentiometric titrator is used to titratecarboxyl terminal group concentration. Take 0.5 g polymer, and add 45 ml o-cresol. Reflux and dissolve. After cooling 400ul formaldehyde is added quiclky. Thenterminal carboxylterminal group concentration is titrated by calibrated KOH-ethanol solution. The test of water absorption is specifically to inject moulding the sample to a 20mm*20mm*2mm article, the weight of which is denoted as $a_0$. Then it is put in an environment of 35 °C and 85% humidity for 168h, the weight of which is denoted as $a_1$. Then water absorption=$(a_1-a_0)/a_0$*100%.

Tensile strength: Tested according to ISO 527-2. Test condition: 23°C and 10mm/min.

Elongation at break: Tested according to ISO 527-2. Test condition: 23°C and 10mm/min.

Flexural strength: Tested according to ISO 178. Test condition: 23°C and 2mm/min.

Flexural modulus: Tested according to ISO 178. Test condition: 23°C and 2mm/min.

IZOD notch impact strength: Tested according to ISO 178. Test condition: 23°C and notch type A.

Reflow soldering experiment is bringing a 64mm*64mm*1mm bar produced by injection moulding to Infrared wave soldering (Surface Mount Technology, SMT). Peak temperature is 260 °C. The surface condition of the bar after SMT is observed with naked eyes.

Relative content of volatile is tested with dynamic headspace gas chromatography: The high temperature nylon resin is smashed and sifted by 25 and 50 mesh sieve. Take 0.5g material, and put it into large volume dynamic headspace sampling device for absorption extraction of volatile. Dynamic headspace sampling device: USA CDS800 type large volume dynamic headspace sampling concentrator, with adsorption trap inside filled with Tenax-GC organic adsorption filler; dynamic headspace conditions: stay at 320 °C for 15min, and purging gas is high purity N2 with flow rate 20ml/min; gas chromatography conditions: USA PerkinElmer Clarus500 type gas chromatography-mass spectrometer; capillary column is DB-5MS (30m*250um, 0.25um); heat programming: stay at 40 °C for 5min, and then rise to 300 °C at 10 °C/min and stay for 5min. injection port temperature is 280 °C; load gas is He gas, with flow rate 0.8ml/min and split ratio 50:1.

Relative content of volatile is calculated according to the method below:

Gas volatile of PA10T resin is setten to 100, and other gas volatile of the resin can be calculated by the ratio between the sum ofintegral areas of mass spectrum and the sum of integral areas of PA10T mass spectrum. Dynamic headspace gas spectrum analysis result of PA10T resin is shown in Figure 1. Gas volatile of other resins can be gotten by using the same test method.

Examples 1-16 and comparative examples 1-10:

To an autoclave having a magnetic coupling agitation, a condensing tube, a gas opening, a charging opening and a pressure anti-explosion opening, the reactants are added according to the ratio in the table, after which benzoic acid, sodium hypophosphite and deionized water are added. The mole content of benzoic acid equals to 2.5% of total mole content of diamine, nylon salt, lactam and amino acid. The weight of sodium hypophosphite equals to 0.1% of other charging weight except deionized water. The weight of deionized water equals to 30% of the total charging weight. Pump and fill in with nitrogen as protect gas, and then the autoclave is heated to 220°C in 2h with stirring and is held at 220 °C for 1h with stirring, after which reactants temperature increased to 230 °C with stirring. The reaction processed for 2h at constant temperature 230 °C and constant pressure 2.2MPa. The pressure maintains constant by removing the produced water. After the reaction the product is flushed. The prepolymer was vacuum dries 24h at 80 °C to produce the prepolymer. The described prepolymer is tackified in solid state for 10h at 250 °C and vacuum condition 50 Pa to get the polyamide. Relative viscosity, melting point, saturated water absorption, bio-based carbon content and gas volatile content of the polyamide are listed in Table 1-5.

Table 1

| | PA10T | Example 1 | Example 2 | Example 3 | Example 4 | Example 5 |
|---|---|---|---|---|---|---|
| Terephthalic acid/mol | 20 | 20 | 20 | 17 | 18.5 | 18 |
| isophthalic acid /mol | 0 | 0 | 0 | 3 | 1.5 | 0 |
| 1,10-decanediamine/mol | 20 | 20 | 20 | 20 | 20 | 20 |

(continued)

| | PA10T | Example 1 | Example 2 | Example 3 | Example 4 | Example 5 |
|---|---|---|---|---|---|---|
| Nylon 66 salt/mol | 0 | 2.2 | 1.1 | 0 | 0 | 0 |
| sebacic acid /mol | 0 | 0 | 0 | 0 | 0 | 2 |
| Terminal amine/mol/t | 42 | 38 | 44 | 50 | 51 | 43 |
| Terminal caboxyl/mol/t | 80 | 82 | 79 | 68 | 77 | 90 |
| Relative viscosity | 2.242 | 2.238 | 2.251 | 2.264 | 2.239 | 2.240 |
| Melting point/°C | 316 | 292 | 303 | 292 | 305 | 304 |
| Saturated water absorption/% | 0.21 | 0.32 | 0.28 | 0.25 | 0.23 | 0.2 |
| Bio-based carbon concentration/% | 55.6 | 51.7 | 53.5 | 55.6 | 55.6 | 60.4 |
| Content of gas volatile | 100 | 122 | 113 | 101 | 98 | 82 |

Table 2

| | Example 6 | Example 7 | Example 8 | Example 9 | Example 10 | Example 11 |
|---|---|---|---|---|---|---|
| Terephthalic acid/mol | 16 | 18.5 | 17 | 20 | 20 | 20 |
| 1,10-decanediamine/mol | 20 | 20 | 20 | 20 | 20 | 20 |
| Nylon 66 salt/mol | 0 | 0 | 0 | 0 | 0 | 0 |
| Sebacic acid/mol | 4 | 0 | 0 | 0 | 0 | 0 |
| Dodecandioic acid/mol | 0 | 1.5 | 3 | 0 | 0 | 0 |
| Carprolactam/mol | 0 | 0 | 0 | 2 | 6 | 0 |
| 11-amino undecanoic acid/mol | 0 | 0 | 0 | 0 | 0 | 2 |
| Terminal amine/mol/t | 47 | 52 | 50 | 39 | 36 | 40 |
| Terminal caboxyl/mol/t | 72 | 93 | 69 | 88 | 84 | 92 |
| Relative viscosity | 2.240 | 2.239 | 2.246 | 2.268 | 2.251 | 2.278 |
| Melting point/°C | 290 | 304 | 291 | 310 | 296 | 303 |
| Saturated water absorption/% | 0.19 | 0.19 | 0.18 | 0.25 | 0.29 | 0.19 |
| Bio-based carbon concentration/% | 65.2 | 54.6 | 53.8 | 53.8 | 50.5 | 58.1 |
| Content of gas volatile | 76 | 89 | 111 | 110 | 133 | 91 |

Table 3

| | Example 12 | Example 13 | Example 14 | Example 15 | Example 16 |
|---|---|---|---|---|---|
| Terephthalic acid/mol | 20 | 20 | 20 | 20 | 20 |
| 1,10-decanediamine/mol | 20 | 20 | 20 | 16.6 | 16.6 |
| 1,6-hexanediamine/mol | 0 | 0 | 0 | 4.2 | 2.1 |
| 11-amino undecanoic acid/mol | 4 | 0 | 0 | 0 | 0 |
| lauryl lactam /mol | 0 | 2 | 4 | 0 | 0 |
| Terminal amine/mol/t | 39 | 38 | 44 | 46 | 50 |
| Terminal caboxyl/mol/t | 89 | 91 | 84 | 87 | 86 |
| Relative viscosity | 2.219 | 2.320 | 2.299 | 2.321 | 2.292 |

(continued)

| | Example 12 | Example 13 | Example 14 | Example 15 | Example 16 |
|---|---|---|---|---|---|
| Melting point/°C | 288 | 302 | 289 | 293 | 309 |
| Saturated water absorption/% | 0.18 | 0.18 | 0.16 | 0.28 | 0.24 |
| Bio-based carbon concentration/% | 60.4 | 52.1 | 49.0 | 47.3 | 49.0 |
| Content of gas volatile | 81 | 119 | 138 | 145 | 139 |

Table 4

| | Comparative example 1 | Comparative example 2 | Comparative example 3 | Comparative example 4 |
|---|---|---|---|---|
| Terephthalic acid/mol | 9 | 11 | 11 | 13 |
| Isophthalic acid/mol | 0 | 0 | 9 | 7 |
| 1,6-hexanediamine/mol | 20 | 20 | 20 | 20 |
| 1,6-adipic acid/mol | 11 | 9 | 0 | 0 |
| Terminal amine/mol/t | 40 | 38 | 45 | 44 |
| Terminal caboxyl/mol/t | 82 | 71 | 88 | 80 |
| Relative viscosity | 2.233 | 2.228 | 2.263 | 2.279 |
| Melting point/°C | 292 | 311 | 294 | 315 |
| Saturated water absorption/% | 1.02 | 0.92 | 0.88 | 0.83 |
| Bio-based carbon concentration/% | 0 | 0 | 0 | 0 |
| Content of gas volatile | 210 | 212 | 220 | 218 |

Table 5

| | Comparative example 5 | Comparative example 6 | Comparative example 7 | Comparative example 8 | Comparative example 9 | Comparative example 10 |
|---|---|---|---|---|---|---|
| Terephthalic acid/mol | 20 | 20 | 20 | 20 | 20 | 20 |
| 1,6-hexanediamine/mol | 20 | 20 | 20 | 20 | 20 | 20 |
| Carprolactam/mol | 21.6 | 10.3 | 0 | 0 | 0 | 0 |
| 11-amino undecanoic acid/mol | 0 | 0 | 16.4 | 10.8 | 0 | 0 |
| lauryl lactam /mol | 0 | 0 | 0 | 0 | 16.4 | 10.8 |
| Terminal amine/mol/t | 35 | 42 | 40 | 28 | 33 | 30 |
| Terminal caboxyl/mol/t | 79 | 85 | 91 | 88 | 90 | 88 |
| Relative viscosity | 2.246 | 2.239 | 2.220 | 2.234 | 2.246 | 2.238 |
| Melting point/°C | 292 | 311 | 290 | 314 | 292 | 313 |
| Saturated water absorption/% | 1.33 | 1.01 | 0.93 | 0.80 | 0.90 | 0.79 |
| Bio-based carbon concentration/% | 0 | 0 | 39.2 | 29.8 | 0 | 0 |
| Content of gas volatile | 215 | 213 | 175 | 183 | 210 | 218 |

From the comparison between examples 1-16 and comparative examples 1-10, it can be observed that the described examples in the present invention, of which the concentration of the bio-based carbon is more than 45%, can produce polyamide with low gas volatile.

Examples 17-22 and comparative examples 11-12:

After well mixing of the polyamide resin, flame retardant, and other addition agent in a high-speed mixer according to the formula of Table 6-7, they are added through the main feeding mouth to the twin-extruder, and the reinforced filler is added through the side-feeder weighting. Extrude, and cold with water, Pelletize and dry to get the described polyamide composition. Wherein, the extruder temperature is set to 330°C.

Table 6 The formula below is part by weight

| | Example17 | Example18 | Example19 | Example20 | Example21 | Example22 |
|---|---|---|---|---|---|---|
| Polyamide resin | Example1 | Example1 | Example7 | Example7 | Example10 | Example10 |
| Content of resin | 70 | 50 | 70 | 50 | 70 | 50 |
| Glass figer | 29 | 30 | 29 | 30 | 29 | 30 |
| Hypophosphite flame retardant | 0 | 15 | 0 | 15 | 0 | 15 |
| Polybutylene | 0 | 2 | 0 | 2 | 0 | 2 |
| Dipentaerythritol | 0 | 1 | 0 | 1 | 0 | 1 |
| Zinc borate | 0 | 1 | 0 | 1 | 0 | 1 |
| Phenol anti-oxidant | 0.5 | 0.5 | 0.5 | 0.5 | 0.5 | 0.5 |
| polyethylene wax | 0.5 | 0.5 | 0.5 | 0.5 | 0.5 | 0.5 |
| Dried tensile strength/MPa | 115 | 85 | 195 | 140 | 142 | 110 |
| Wet tensile strength/MPa | 114 | 82 | 189 | 136 | 122 | 88 |
| Dried elongation at break/% | 2.2 | 2.0 | 3.2 | 2.7 | 2.8 | 2.6 |
| Wet elongation at break/% | 2.3 | 2.0 | 3.1 | 2.7 | 2.9 | 2.7 |
| Flexural strength/MPa | 159 | 120 | 275 | 205 | 188 | 163 |
| Flexural modulus/MPa | 8500 | 8100 | 9500 | 8500 | 9400 | 8600 |
| IZOD notch impact strength/kJ/$m^2$(23 oC) | 5.5 | 4.0 | 12 | 9.5 | 8.3 | 6.2 |
| Surface condition after reflow soldering | ⊙ | ⊙ | ⊙ | ⊙ | ⊙ | ⊙ |
| Content of gas volatile | 322 | 543 | 420 | 689 | 540 | 805 |
| Wherein, ⊙means no blistering and ○ means blistering. | | | | | | |

Table 7

| | Comparative example11 | Comparative example12 | Comparative example13 | Comparative example14 | Comparative example15 | Comparative example1 6 |
|---|---|---|---|---|---|---|
| Polyamide resin | Comparative example1 | Comparative example1 | Comparative example7 | Comparative example7 | Comparative example10 | Comparative example10 0 |
| Content of resin | 70 | 50 | 70 | 50 | 70 | 50 |
| Glass figer | 29 | 30 | 29 | 30 | 29 | 30 |
| Hypophosphite flame retardant | 0 | 15 | 0 | 15 | 0 | 15 |
| Polybutylene | 0 | 2 | 0 | 2 | 0 | 2 |
| Dipentaerythrit ol | 0 | 1 | 0 | 1 | 0 | 1 |
| Zinc borate | 0 | 1 | 0 | 1 | 0 | 1 |
| Phenol anti-oxidant | 0.5 | 0.5 | 0.5 | 0.5 | 0.5 | 0.5 |
| polyethylene wax | 0.5 | 0.5 | 0.5 | 0.5 | 0.5 | 0.5 |
| Dried tensile strength/MPa | 115 | 85 | 195 | 140 | 142 | 110 |
| Wet tensile strength/MPa | 114 | 82 | 189 | 136 | 122 | 88 |
| Dried elongation at break/% | 2.2 | 2.0 | 3.2 | 2.7 | 2.8 | 2.6 |
| Wet elongation at break/% | 2.3 | 2.0 | 3.1 | 2.7 | 2.9 | 2.7 |
| Flexural strength/MPa | 159 | 120 | 275 | 205 | 188 | 163 |
| Flexural modulus/MPa | 8500 | 8100 | 9500 | 8500 | 9400 | 8600 |
| IZOD notch impact strength /kJ/m$^2$(23 oC) | 5.5 | 4.0 | 12 | 9.5 | 8.3 | 6.2 |
| Surface condition after reflow soldering | ○ | ○ | ○ | ○ | ○ | ○ |
| Content of gas volatile | 1800 | 2600 | 1500 | 2100 | 2100 | 2900 |
| Wherein, ⊙means no blistering and ○ means blistering. | | | | | | |

It can be seen from Table 6 and Table 7 that, gas volatile content of the polyamide composition produced from the polyamide resin of the examples in the present invention is much lower and reflow soldering surface property is much better, and the polyamide composition can be applied to the field of requiring high-temperature processing article.

The description above is only examples of the present invention, but not to limit patent scope of the present invention. Any equivalent structures or equivalent procedure transformations using content of specification of the present invention, or other related technical field used directly or indirectly, are included in the patent protection scope in the present invention similarly.

## Claims

1. A polyamide resin is characterized in thatrepeating units of the polyamide resin consist of the following components:

   Component A: 40-50mol% of dicarboxylic acid units, based on the total repeating units of the polyamide resin;
   Component B: 40-50mol% of aliphatic diamine units having 2-14 carbon atoms, based on the total repeating units of the polyamide resin;
   Component C: 0-10mol% of lactam or amino acid units having 6-14 carbon atoms, based on the total repeating units of the polyamide resin;
   wherein, the described component A is composed of 70-100mol% of benzenedicarboxylic acid unit A1 and 0-30mol% of aliphatic dicarboxylic acid unit A2, based on the total mole content of component A;
   wherein, the described component B is composed of 70-100mol% of 1,10-decanediamine unit B1, and 0-30mol% of aliphatic diamine unit B2 having 2-9 carbon atoms, and 0-10mol% of aliphatic diamine unit B3 having 11-14 carbon atoms, based on the total mole content of component B;
   and satisfy that at least an arbitrary component of component A or B, comprises more than two different units; in the described polyamide resin, the bio-based carbon concentration is more than 45%; the described bio-based carbon concentration is calculated according to the formula below:

   bio-based carbon concentration=(bio-based carbon mole content/total organic carbon mole content)*100%.

2. A polyamide resin according to claim 1 is **characterized in that**, in the described polyamide resin, mole concentration of the bio-based carbon is more than 50%.

3. A polyamide resin according to claim 1 is **characterized in that**, in the described polyamide resin, mole concentration of the bio-based carbon is more than 55.6%.

4. A polyamide resin according to any of claims 1 to 3, is **characterized in that** described benzenedicarboxylic acid unit A1 is composed of 80-100mol% of terephthalic acid unit, 0-20mol% of isophthalic acid unit and 0-10mol% of phthalicacid unit; and wherein, the described aliphatic acid unit is aliphatic acid unit having 2-14 carbon atoms.

5. A polyamide resin according to any of claims 1 to 3, is **characterized in that**, described aliphatic acid is selected from at least one of oxalic acid, malonic acid, succinic acid, glutaric acid, adipic acid, pimelic acid, suberic acid, 2-methyl suberic acid,azelaic acid, sebacic acid, undecanedioic acid, dodecanedioic acid, brassylic acid or tetradecanedioic acid.

6. A polyamide resin according to any of claims 1 to 3, is **characterized in that**, described aliphatic diamine having 2-9 carbons is selected from any one or several of ethylenediamine, propane diamine, putrescine, cadaverine, 2-methyl-pentanediamine, hexanediamine, heptanediamine, octanediamine, 2-methyl-octanediamine, 2,2,4-trimethylhexamethylenediamine, 2,4,4-trimethylhexamethylenediamine, 5-methylene-nonanediamine ornonanediamine; and wherein, the described aliphatic diamine having 11-14 carbon atoms is selected from any one or several of undecanediamine, dodecanediamine, tridecanediamine or tetradecanediamine.

7. A polyamide resin according to any of claims 1 to 3, is **characterized in that**, described lactam or amino acid having 6-14 carbon atoms is selected from any one or several of 6-amino adipic acid, caprolactam, 10-amino decanoic acid, 11-amino undecanoic acid, azacyclododecan-2-one, 12-amino dodecanoic acid or laurolactam.

**8.** A polyamide resin according to any of claims 1 to 3, is **characterized in that**, melting point of the described polyamide resin is higher than 270 °C.

**9.** The application of the polyamide resin according to any of claims 1 to 8 forthe production of the polyamide composition.

**10.** A polyamide composition is **characterized in that**, described polyamide composition comprises the following components in percentage by weight:

30 to 99.7% of the polyamide resin according to any of claims 1 to 8,
0 to 60% of reinforced filler,
0 to 50% of flame retardant,
0 to 10% of other addition agent;

The described flame retardant can be flame retardant or composition of flame retardant and synergistic flame retardant; and at least one component of reinforced filler, flame retardant and other addition agent is not equal to 0.

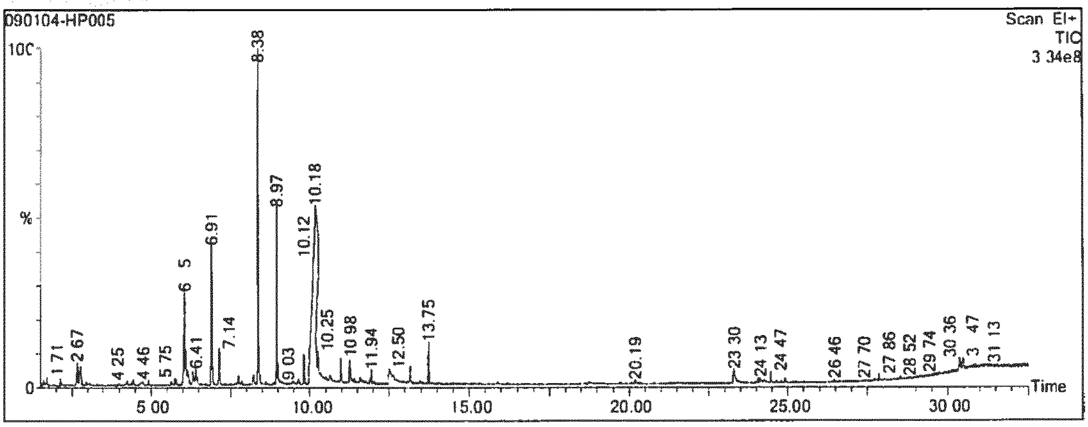
090104-HP005
Scan EI+
TIC
3 34e8
100
%
0
8.38
8.97
10.18
10.12
6.91
6 5
7.14
6.41
2 67
1 71
4 25
4 46
5 75
9 03
10.25
10 98
11.94
12.50
13.75
20.19
23 30
24 13
24 47
26 46
27 70
27 86
28 52
29 74
30 36
3 47
31 13
5 00
10.00
15.00
20.00
25.00
30 00
Time

Figure 1

| INTERNATIONAL SEARCH REPORT | International application No. PCT/CN2014/070447 |
|---|---|

**A. CLASSIFICATION OF SUBJECT MATTER**

C08G 69/36 (2006.01) i; C08L 77/00 (2006.01) i

According to International Patent Classification (IPC) or to both national classification and IPC

B. FIELDS SEARCHED

Minimum documentation searched (classification system followed by classification symbols)

C08G 69; C08L 77

Documentation searched other than minimum documentation to the extent that such documents are included in the fields searched

Electronic data base consulted during the international search (name of data base and, where practicable, search terms used)

WPI, CNPAT, CNKI, EPODOC: nylon salt, amino acid, carbon based on biology, gas emission, polyamide?, terephthalic acid, decane diamine, amino carboxylic acid, lactam

C. DOCUMENTS CONSIDERED TO BE RELEVANT

| Category* | Citation of document, with indication, where appropriate, of the relevant passages | Relevant to claim No. |
|---|---|---|
| X | CN 102153741 A (SHANGHAI GENIUS ADVANCED MATERIALS (GROUP) CO.,LTD. et al.) 17 August 2011 (17.08.2011) description, paragraphs [0009] to [0055] and [0083] to [0085] | 1-10 |
| PX | CN 103087310 A (KINGFA SCI. & TECH. CO., LTD. et al.) 08 May 2013 (08.05.2013) description, paragraphs [0004] to [0068] | 1-10 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&"document member of the same patent family

| Date of the actual completion of the international search | Date of mailing of the international search report |
|---|---|
| 05 March 2014 (05.03.2014) | 16 April 2014 (16.04.2014) |
| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br>LI, Yanfang<br>Telephone No. (86-10) 82246929 |

Form PCT/ISA /210 (second sheet) (July 2009)

**INTERNATIONAL SEARCH REPORT**
Information on patent family members

International application No.
PCT/CN2014/070447

| Patent Documents referred in the Report | Publication Date | Patent Family | Publication Date |
|---|---|---|---|
| CN 102153741 A | 17.08.2011 | WO 2011097832 A1 | 18.08.2011 |
| | | CN 102153741 B | 06.11.2013 |
| CN 103087310 A | 08.05.2013 | None | |

Form PCT/ISA /210 (patent family annex) (July 2009)